# EUROPEAN PATENT APPLICATION

(11) **EP 4 568 307 A1**
(43) Date of publication of application: **11.06.2025**
(21) Application number: 23849345.6
(22) Date of filing: 31.07.2023
(51) Int. Cl.: H04W 8/18

(54) **UE CAPABILITY CONTROL METHOD AND APPARATUS, AND TERMINAL AND NETWORK-SIDE DEVICE**

(30) Priority: 04.08.2022 CN 202210934864
(71) Applicant: Vivo Mobile Communication Co., Ltd., Dongguan, Guangdong 523863 (CN)
(72) Inventor: PU, Wenjuan, Dongguan, Guangdong 523863 (CN); YANG, Xiaodong, Dongguan, Guangdong 523863 (CN)
(74) Representative: Winter, Brandl - Partnerschaft mbB
(86) International application number: PCT/CN2023/110197
(87) International publication number: WO 2024/027638

(57) **Abstract**

The present application belongs to the technical field of communications. Disclosed are a UE capability control method and apparatus, and a terminal and a network-side device. The UE capability control method in the embodiments of the present application comprises: when a trigger condition of a radio resource control (RRC) connection recovery process is satisfied, a UE executing a first behavior, wherein the first behavior comprises any one of the following: when the UE capability of the UE is lower than a target UE capability, entering an RRC idle state; and initiating the RRC connection recovery process, and ensuring that the UE capability of the UE is not lower than the target UE capability and/or sending target information during the RRC connection recovery process or after the RRC connection recovery process, the target information being used for indicating the capability of the UE.

## Description

### CROSS-REFERENCE TO RELATED APPLICATIONS

This application claims priority to Chinese Patent Application No. 202210934864.5, filed in China on August 4, 2022, which is incorporated herein by reference in its entirety.

### TECHNICAL FIELD

This application pertains to the field of communication technologies, and specifically relates to a UE capability control method and apparatus, a terminal, and a network-side device.

### BACKGROUND

When a terminal in a radio resource control (Radio Resource Control, RRC) inactive state is in the RRC inactive state or initiates RRC connection resumption, a capability of the user equipment (User Equipment, UE) may be inconsistent with a UE capability stored on a network side, and the inconsistency causes the network side to send a configuration exceeding the terminal capability to the terminal in an RRC connection resume procedure, resulting in a transmission anomaly on the terminal.

### SUMMARY

Embodiments of this application provide a UE capability control method and apparatus, a terminal, and a network-side device to resolve a problem that a transmission anomaly arises on the terminal because a network side sends a configuration exceeding a terminal capability to a terminal in an RRC connection resume procedure in the related art.

According to a first aspect, a UE capability control method is provided and includes:
performing, by UE, a first behavior in a case that a trigger condition of a radio resource control RRC connection resume procedure is met, where
the first behavior includes any one of the following:
   in a case that a UE capability of the UE is lower than a target UE capability, entering an RRC idle state; and
   initiating the RRC connection resume procedure, and ensuring that the UE capability of the UE is not lower than the target UE capability, and/or sending target information during the RRC connection resume procedure or after the RRC connection resume procedure, where the target information is used to indicate the UE capability of the UE.

According to a second aspect, a UE capability control method is provided and includes:
receiving, by a network-side device, target information sent by UE in a case that an RRC connection resume procedure is initiated, where the target information is used to indicate a UE capability of the UE; or
in a case that a first condition is met, releasing, by a network-side device, UE to an RRC idle state when releasing the UE, where the first condition includes at least one of the following:
   the UE is a MUSIM communication device;
   the UE supports a capability change; and
   the UE has reported preference information of the capability change.

According to a third aspect, a UE capability control apparatus is provided. The apparatus is applied to UE and includes:
a first execution module, configured to perform a first behavior in a case that a trigger condition of a radio resource control RRC connection resume procedure is met, where
the first behavior includes any one of the following:
   in a case that a UE capability of the UE is lower than a target UE capability, entering an RRC idle state; and
   initiating the RRC connection resume procedure, and ensuring that the UE capability of the UE is not lower than the target UE capability, and/or sending target information during the RRC connection resume procedure or after the RRC connection resume procedure, where the target information is used to indicate the UE capability of the UE.

According to a fourth aspect, a UE capability control apparatus is provided. The apparatus is applied to a network-side device and includes:
a second execution module, configured to receive target information sent by UE in a case that an RRC connection resume procedure is initiated, where the target information is used to indicate a UE capability of the UE; or
a second execution module, configured to release UE to an RRC idle state when releasing the UE in a case that a first condition is met, where the first condition includes at least one of the following:
   the UE is a MUSIM communication device;
   the UE supports a capability change; and
   the UE has reported preference information of the capability change.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The processor is configured to perform a first behavior in a case that a trigger condition of a radio resource control RRC connection resume procedure is met, where the first behavior includes any one of the following:
in a case that a UE capability of the UE is lower than a target UE capability, entering an RRC idle state; and
initiating the RRC connection resume procedure, and ensuring that the UE capability of the UE is not lower than the target UE capability, and/or sending target information during the RRC connection resume procedure or after the RRC connection resume procedure, where the target information is used to indicate the UE capability of the UE.

According to a seventh aspect, a network-side device is provided. The network-side device includes a processor and a memory. The memory stores a program or instructions capable of running on the processor. When the program or instructions are executed by the processor, the steps of the method according to the second aspect are implemented.

According to an eighth aspect, a network-side device is provided and includes a processor and a communication interface. The communication interface is configured to receive target information sent by UE in a case that an RRC connection resume procedure is initiated, where the target information is used to indicate a UE capability of the UE; or the processor is configured to release UE to an RRC idle state when releasing the UE in a case that a first condition is met, where the first condition includes at least one of the following:
the UE is a MUSIM communication device;
the UE supports a capability change; and
the UE has reported preference information of the capability change.

According to a ninth aspect, a communication system is provided and includes a terminal and a network-side device. The terminal may be configured to perform the steps of the UE capability control method according to the first aspect. The network-side device may be configured to perform the steps of the UE capability control method according to the second aspect.

According to a tenth aspect, a readable storage medium is provided. The readable storage medium stores a program or instructions. When the program or instructions are executed by a processor, the steps of the UE capability control method according to the first aspect are implemented, or the steps of the UE capability control method according to the second aspect are implemented.

According to an eleventh aspect, a chip is provided. The chip includes a processor and a communication interface. The communication interface is coupled to the processor. The processor is configured to run a program or instructions to implement the UE capability control method according to the first aspect or implement the UE capability control method according to the second aspect.

According to a twelfth aspect, a computer program or program product is provided. The computer program or program product is stored in a storage medium. The computer program or program product is executed by at least one processor to implement the UE capability control method according to the first aspect or implement the UE capability control method according to the second aspect.

In the embodiments of this application, in the case that the trigger condition of the RRC connection resume procedure is met, the UE can ensure that the UE capability is not lower than the target UE capability, or if the UE capability is lower than the target UE capability, the terminal enters the RRC idle state, or the UE sends the target information during the RRC connection resume procedure or after the RRC connection resume procedure to indicate the current UE capability of the UE. In this way, for multi-card user equipment, an access stratum (Access Stratum, AS) configuration that exceeds the UE capability can be prevented from being configured by the network-side device when the UE initiates RRC connection resumption, to avoid a transmission anomaly between the UE and the network-side device and ensure smooth transmission between the UE and the network-side device.

### BRIEF DESCRIPTION OF DRAWINGS

FIG. 1 is a block diagram of a wireless communication system to which an embodiment of this application may be applied;
FIG. 2 is a flowchart of a UE capability control method according to an embodiment of this application;
FIG. 3 is a flowchart of another UE capability control method according to an embodiment of this application;
FIG. 4 is a structural diagram of a UE capability control apparatus according to an embodiment of this application;
FIG. 5 is a structural diagram of another UE capability control apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

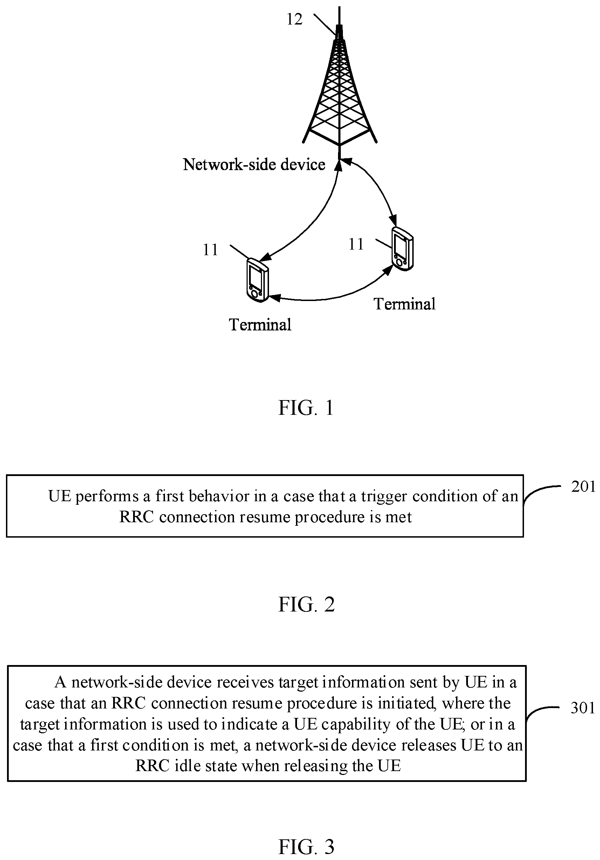

FIG. 1 is a block diagram of a wireless communication system to which an embodiment of this application may be applied. The wireless communication system includes user equipment 11 and a network-side device 12. The user equipment 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the user equipment 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wireless Fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

For better understanding, the following describes related concepts that may be involved in the embodiments of this application.

### Multi-card terminal:

A multi-card terminal is a terminal in which more than one universal subscriber identity module (Universal Subscriber Identity Module, USIM) card is installed. Using a dual-card terminal as an example, according to whether the terminal supports simultaneous transmission or reception in networks of two cards, the dual-card terminal may be classified as a single-transmit single-receive terminal, a single-transmit dual-receive terminal, or a dual-transmit dual-receive terminal.

Single-transmit single-receive terminal: Due to an implementation of the terminal (for example, the two cards share a same set of hardware or radio frequency), the terminal can only send and receive information alternately in the networks of the two cards in time division mode.

Single-transmit dual-receive terminal: The terminal can only perform uplink transmission alternately in the networks of the two cards in time division mode, but supports simultaneous downlink reception in the networks of the two cards.

Dual-transmit dual-receive terminal: The terminal supports simultaneous uplink transmission and downlink reception in the networks of the two cards.

### Temporary capability restriction (Temporary Capability restriction):

Currently, for a dual-transmit dual-receive multi-card terminal, each card uses an independent hardware module to support simultaneous reception and transmission. However, this mode has problems such as low hardware usage efficiency and high costs. For this reason, 3GPP Rel-18 will study how to support a dual-card terminal in dynamically handing over capabilities between networks of two cards in a case that the two cards share some hardware modules. For example, when card A is in a connected state and card B is in a disconnected state, capabilities of the terminal are occupied by card A. If card B is to establish or resume a radio resource control (Radio Resource Control, RRC) connection, it is necessary to hand over some capabilities of card A to card B. In this case, the terminal needs to indicate a temporary capability restriction state (that is, some capabilities will be used for the other card) to network A; otherwise, the terminal will lose data of network A or a problem such as waste of network resources is caused.

The terminal indicates the temporary capability restriction to a network side, where the temporary capability restriction may be that some wireless capabilities of the terminal are not supported for a short time, or that the terminal does not change wireless capabilities, but implements the restriction by requesting or instructing the network side to disable some functions/resources. For example, when the dual-card terminal in a connected state in network A is configured with dual connectivity (Dual Connectivity, DC), a secondary cell group (Secondary Cell Group, SCG) is in an active state. If the terminal wants to initiate RRC connection establishment in network B in this case, the multi-card terminal may request to suspend/deactivate the SCG in network A.

When the terminal in an RRC inactive (INACTIVE) state is in the RRC inactive state or initiates RRC connection resumption, a capability of the UE is inconsistent with a UE capability in an access stratum (Access Stratum, AS) context stored by a base station side, and the inconsistency causes the network side to send a configuration exceeding the UE capability to the UE in an RRC connection resume procedure, resulting in a transmission anomaly on the terminal.

A UE capability control method provided in the embodiments of this application is hereinafter described in detail by using some embodiments and application scenarios thereof with reference to the accompanying drawings.

FIG. 2 is a flowchart of a UE capability control method according to an embodiment of this application. As shown in FIG. 2, the method includes the following step.

Step 201: UE performs a first behavior in a case that a trigger condition of an RRC connection resume procedure is met, where
the first behavior includes any one of the following:
in a case that a UE capability of the UE is lower than a target UE capability, entering an RRC idle state; and
initiating the RRC connection resume procedure, and ensuring that the UE capability of the UE is lower than the target UE capability, and/or sending target information during the RRC connection resume procedure or after the RRC connection resume procedure, where the target information is used to indicate the UE capability of the UE.

It should be noted that the method provided in this embodiment of this application is applied to a terminal, where the terminal is a multi-card terminal, that is, the terminal is a multi-universal subscriber identity module (Multi-Universal Subscriber Identity Module, MUSIM) communication device. In this case, the UE is UE corresponding to one USIM card of the multi-card terminal, and the UE capability of the UE is a capability of the UE corresponding to the USIM card. UE and a UE capability in subsequent embodiments may be understood with reference to the description herein. Details are not described again subsequently. Optionally, in a case that the UE is UE corresponding to a first USIM card in the MUSIM communication device, the UE capability and the target UE capability of the UE correspond to the first USIM card.

For example, the UE includes USIM card 1 and USIM card 2. When USIM card 1 (that is, a target USIM card) is in a connected state, that is, when USIM card 1 accesses corresponding network 1 (that is, a target network-side device), the UE capability is also a UE capability corresponding to USIM card 1. Optionally, the UE capability may be all UE capabilities or part of UE capabilities (for example, part of the UE capabilities are occupied by USIM card 2).

Optionally, the target UE capability is a UE capability stored by the network-side device, or a UE capability last reported by the UE to the network-side device. For example, the target UE capability may be a current corresponding UE capability reported by the UE in an RRC connected state to the network-side device.

Optionally, the target UE capability may be a set of UE capabilities or a plurality of sets of UE capabilities. For example, if the target UE capability is a plurality of sets of UE capabilities stored by the network-side device, the first behavior may be that the UE ensures that the UE capability is not lower than a set of UE capabilities with lowest capabilities in the plurality of sets of UE capabilities stored by the network-side device in a case that the UE initiates the RRC connection resume procedure based on USIM card 1, so as to ensure smooth transmission between the UE and the network-side device.

It should be noted that both the UE capability and the target UE capability are composed of several parameters, which are used to indicate a frequency band, a frequency band combination, carrier aggregation, dual connectivity, a multiple-input multiple-output (Multiple-Input Multiple-Output, MIMO) layer (layer), a feature, a function, and the like supported by the UE.

Optionally, the trigger condition of the RRC connection resume procedure includes at least one of the following:
the UE is in an RRC inactive state and receives paging (paging) from an access network (Radio Access Network, RAN);
the UE is in the RRC inactive state and receives an RRC connection resume request sent by an upper layer;
the UE is in the RRC inactive state and an uplink service arrives; and
the UE needs to perform a RAN-based notification area update (RAN-based notification area update, RNAU).

In an implementation, the UE may initiate RRC connection resumption in the case that the trigger condition of the RRC connection resume procedure is met. For example, in a case that the UE initiates RRC connection resumption, it is ensured that the UE capability is not lower than the target UE capability. For example, it can be ensured that the UE capability is consistent with the target UE capability. For example, in a case that the UE initiates RRC connection resumption based on USIM card 1, a UE capability occupied by USIM card 2 may be handed back to ensure that the UE capability corresponding to USIM card 1 is not lower than the target UE capability, for example, not lower than the UE capability stored by the network-side device.

In another implementation, if the UE capability is lower than the target UE capability in the case that the trigger condition of the RRC connection resume procedure is met, the UE enters the RRC idle state. For example, when the UE receives RAN paging (that is, the trigger condition of the RRC connection resume procedure is met), if the UE capability is lower than the target UE capability in this case, the UE does not initiate the RRC connection resume procedure, but enters the RRC idle state.

Optionally, after the UE enters the RRC idle state, the UE initiates an RRC connection establishment procedure.

Optionally, in a case that the UE initiates the RRC connection establishment procedure, the UE performs at least one of the following:
(1) the UE ensures that the UE capability is not lower than a mandatory UE capability specified by a protocol or not lower than a UE capability stored by a core network; and
(2) the UE sends the UE capability or sends indication information of a UE capability change or a UE capability restriction by using one of the following:
   an RRC connection establishment request message;
   an RRC connection establishment complete message;
   a security mode command (Security Mode Command, SMC) complete message;
   a UE information response (Information response) message;
   a random access resource used in the RRC connection establishment procedure; and
   a logical channel used by the RRC connection establishment request message.

Alternatively, in another implementation, in the case that the trigger condition of the RRC connection resume procedure is met, the UE initiates the RRC connection resume procedure, and during the RRC connection resume procedure or after the RRC connection resume procedure, the UE sends the target information to the network-side device, to indicate the UE capability by using the target information, for example, indicate that the UE capability is restricted or that the UE capability is changed, thereby ensuring that the network-side device can learn the current UE capability of the UE in time, and avoiding a transmission anomaly between the UE and the network-side device because the network-side device sends a configuration exceeding the UE capability to the UE.

Alternatively, in another implementation of this embodiment of this application, in a case that the UE in the RRC idle state initiates the RRC connection establishment procedure (a trigger condition of the RRC connection establishment procedure in the RRC idle state is met, or the UE backs off from the RRC inactive state to the RRC idle state), if the UE capability is lower than the target UE capability, the UE may send the target information during the RRC connection establishment or after the RRC connection establishment, where the target information is used to indicate the UE capability. For the method for sending the target information by the UE and content of the target information, reference may be made to the method in the scenario in which the UE in the RRC inactive state initiates the RRC connection resume procedure. For example, the UE in the RRC idle state receives CN paging and needs to initiate the RRC connection establishment procedure, but the UE capability is inconsistent with the UE capability stored by the core network. In this case, the UE may indicate, in the RRC connection establishment complete message or SMC complete message, that the capability of the UE is restricted or that the capability of the UE is changed, thereby ensuring that the network-side device can prevent an RRC reconfiguration message sent by the network side from carrying configuration information exceeding the current capability of the UE. For another example, the UE in the RRC idle state receives CN paging and needs to initiate the RRC connection establishment procedure, but the UE capability is inconsistent with the UE capability stored by the core network. In this case, the UE may further use a specific logical channel to send an RRC connection establishment request message. After receiving the RRC connection establishment request message, the network side knows, based on the logical channel used by the UE, that the UE is in a capability changed or restricted state. In this way, a more conservative strategy can be used when the UE is scheduled or configured. It should be noted that a difference between this implementation and the previous implementation is only a difference in scenarios or preconditions under which the UE sends the target information. In this embodiment of this application, the UE can ensure that the UE capability is not lower than the target UE capability in a case that the trigger condition of the RRC connection establishment procedure is met, or the UE sends the target information when initiating the RRC connection establishment procedure or after the RRC establishment procedure, and indicates the current UE capability of the UE based on the target information. In this way, for the multi-card user equipment, an AS configuration that exceeds the UE capability can be prevented from being configured by the network-side device when the UE enters the RRC connected state or immediately after the UE enters the RRC connected state, to avoid a transmission anomaly between the UE and the network-side device and ensure smooth transmission between the UE and the network-side device.

Optionally, the target UE capability includes at least one of the following:
a UE capability stored by the UE in the RRC inactive state;
a UE capability stored by the network-side device;
a UE capability last reported by the UE to the network-side device; and
a UE capability of the UE last confirmed by the network-side device.

For the UE capability stored by the UE in the RRC inactive state, the UE may store its reported capability in a UE inactive AS context.

Optionally, the ensuring that the UE capability is not lower than the target UE capability includes:
in a case that the target UE capability includes only one set of UE capabilities, ensuring, by the UE, that the UE capability is not lower than the target UE capability; or
in a case that the target UE capability includes N sets of UE capabilities, ensuring, by the UE, that the UE capability is not lower than a specific set of UE capabilities in the N sets of UE capabilities, where N is an integer greater than 1.

It should be noted that the target UE capability is the UE capability stored by the network-side device. For example, the network-side device may determine the target UE capability based on the UE capability last reported by the UE. Optionally, the UE in the RRC connected state may report only one set of UE capabilities, and the target UE capability is the reported set of UE capabilities; and when the UE is in the idle state or the inactive state, for example, in a case that the UE initiates the RRC connection resume procedure based on USIM card 1, the UE ensures that the current UE capability is not lower than the target UE capability, that is, not lower than the set of UE capabilities reported by the UE in the RRC connected state, to avoid a transmission anomaly between the UE and the network-side device after the RRC connection resumption.

Alternatively, the UE in the RRC connected state may report N sets of terminal capabilities to the network-side device; and when the UE initiates the RRC connection resume procedure, the UE ensures that the UE capability is not lower than a specific set of UE capabilities in the N sets of UE capabilities stored by the network-side device, for example, not lower than a set of UE capabilities with lowest capabilities in the N sets of UE capabilities, so that the network-side device configures the UE based on the set of UE capabilities with lowest capabilities, so as to prevent the network-side device from sending an AS configuration that exceeds the UE capability to the UE.

Optionally, the specific set of UE capabilities is either of the following:
a set of UE capabilities with lowest capabilities in the N sets of UE capabilities; and
a set of UE capabilities indicated by the network-side device.

For example, the network-side device may indicate a set of UE capabilities to the UE. When the UE initiates the RRC connection resume procedure, the UE ensures that the current UE capability is not lower than the UE capability indicated by the network-side device, and the network-side device configures the UE based on the indicated UE capability. In this way, an AS configuration that exceeds the UE capability can be prevented from being sent by the network-side device to the UE, to ensure smooth transmission between the UE and the network-side device.

Optionally, in the case that the target UE capability includes the only one set of UE capabilities, the method further includes:
in a case that the UE is in the RRC connected state, sending first information to the network-side device, where the first information is used to indicate the target UE capability when the UE is released to the RRC inactive state.

For example, the terminal in the connected state may send the first information to the network side, where the first information indicates the UE capability stored by the network side when the UE is released to the RRC inactive (INACTIVE) state, that is, the target UE capability. For example, the target UE capability is a set of lowest UE capabilities of the UE; and when the UE initiates the RRC connection resume procedure, the network-side device may configure the UE based on the lowest UE capabilities.

Specifically, in the inactive state, the UE may move to other cells such as cell 1 to initiate RRC connection resumption. After receiving a connection resume request of the UE, a base station (serving base station) corresponding to cell 1 first obtains context information of the UE from an anchor base station. The anchor base station may directly send the lowest capabilities of the UE in the context information of the UE as UE capability information to the serving base station, and then the serving base station sends an RRC connection resume message to the UE based on the context information of the UE to perform an AS configuration.

In this embodiment of this application, the UE may initiate the RRC connection resume procedure in the case that the trigger condition of the RRC connection resume procedure is met, and send the target information during the RRC connection resume procedure or after the RRC connection resume procedure; or in the case that the UE in the RRC idle state initiates the RRC connection establishment procedure, if the UE capability is lower than the target UE capability, the UE may send the target information during the RRC connection establishment or after the RRC connection establishment. The target information may include at least one of the following:
a first UE identity, where the first UE identity is associated with a first target UE capability;
first indication information, where the first indication information is used to indicate that the UE capability of the UE is restricted or changed; and
the UE capability of the UE.

For example, the UE sends the first UE identity to the network-side device during the RRC connection resume procedure or after the RRC connection resume procedure, and the first UE identity is associated with the first target UE capability, so that the network-side device can determine, based on the first UE identity, which set of UE capabilities is used by the UE. Therefore, the network-side device can perform an AS configuration based on the UE capability used by the UE. Alternatively, the current UE capability of the UE is close to a target UE capability (for example, the first target UE capability), and the UE may also indicate the target UE capability using the UE identity.

Alternatively, the first indication information indicates that the UE capability of the UE is restricted, so that the network-side device can learn, based on the first indication information, that the UE capability is restricted or changed. In this case, the network-side device can perform an AS configuration based on a lowest UE capability of the UE.

Alternatively, the first indication information is used to indicate the UE capability of the UE, so that the network-side device can perform an AS configuration based on the UE capability.

Optionally, the method further includes:
before the UE enters the RRC inactive state, receiving first configuration information in a case that the UE is in the RRC connected state, where
the first configuration information is used to configure N first UE identities associated with N sets of target UE capabilities, one set of target UE capabilities corresponds to one of the first UE identities, the N sets of target UE capabilities include the first target UE capability, and N is a positive integer greater than 1.

For example, when the UE is in the RRC connected state, the UE reports a plurality of sets of UE capabilities of the UE to the network-side device. When the network-side device releases the UE to the RRC inactive state, the network-side device sends first configuration information to the UE, where the first configuration information includes a plurality of first UE identities corresponding to a plurality of sets of target UE capabilities, and each first UE identity is associated with one set of target UE capabilities. When the UE initiates the RRC connection resume procedure, the UE can determine a corresponding first UE identity based on the currently used UE capability, and report the first UE identity to the network-side device. Therefore, the network-side device can determine, based on the first UE identity, the target UE capability associated with the first UE identity, so that the network-side device can perform an AS configuration based on the target UE capability and avoid a transmission anomaly between the UE and the network-side device.

Optionally, in the case that the target UE capability includes the N sets of UE capabilities, the method further includes:
in the case that the UE is in the RRC connected state, reporting the N sets of UE capabilities to the network-side device.

Understandably, the UE in the RRC connected state can report the N sets of UE capabilities to the network-side device, so that the network-side device can also store the N sets of UE capabilities, that is, the target UE capability may include the N sets of UE capabilities reported by the UE.

Optionally, the reporting the N sets of UE capabilities to the network-side device includes at least one of the following:
reporting the N sets of UE capabilities to the network-side device;
in a case that the network-side device stores one set of UE capabilities, reporting N-1 sets of UE capabilities; and
reporting, based on one set of UE capabilities, differential information between N-1 sets of UE capabilities and the one set of UE capabilities.

It should be noted that the differential information between the N-1 sets of UE capabilities and the one set of UE capabilities is reported based on the one set of UE capabilities, where the one set of UE capabilities may be considered as baseline UE capabilities.

In addition, the UE may report a common part of the N sets of UE capabilities and a differential part of the N sets of UE capabilities.

In this embodiment of this application, in a case that the target information includes the first indication information, the UE sends the first indication information to the network-side device by using any one of the following:
a spare bit (1 bit) in an RRC connection resume request message;
a resume cause (resume cause) value in the RRC connection resume request message;
an RRC connection resume complete message;
a UE information response (information response) message;
a logical channel corresponding to the RRC connection resume request message; and
a random access resource used in the RRC connection resume procedure.

Optionally, in a case that the UE sends the first indication information by using the RRC connection resume request message, the method further includes:
in a case that the UE initiates an RRC connection resume request, determining the resume cause value based on a trigger cause of the RRC connection resumption and the first indication information.

In other words, if the first indication information is allowed to be indicated by the resume cause value, the UE may determine the resume cause value with reference to the trigger cause of the RRC connection resumption and the first indication information. For example, if the RRC connection resumption is triggered by access network (Radio Access Network, RAN) paging (paging), and a corresponding resume cause is mt-access, that is, mobile terminated, a probability that access is allowed by the network is higher. In this case, the UE should still use mt-access. However, if the RRC connection resumption is triggered by a data service of the UE, the UE may set the resume cause to the first indication information instead of mo-Data.

Optionally, in a case that the UE sends the first indication information to the network-side device by using the RRC connection resume complete message or the UE information response message, the first indication information is further used to indicate the restricted UE capability of the UE. It should be noted that, because the RRC connection resume complete message and the UE information response message can carry more information, the UE can use the RRC connection resume complete message or the UE information response message to report which capabilities of the UE are in a restricted state, that is, the first indication information can be used to indicate specific restricted capabilities of the UE.

In this embodiment of this application, that UE performs a first behavior in a case that a trigger condition of an RRC connection resume procedure is met includes:
in a case that the UE initiates the RRC connection resume procedure, if the UE capability is inconsistent with the target UE capability, the UE sends the first indication information to the network-side device.

In this embodiment of this application, in the case that the UE initiates the RRC connection resume procedure, if the UE capability is inconsistent with the target UE capability, for example, if the UE capability is inconsistent with the UE capability stored by the network-side device, the UE sends the first indication information to the network-side device to indicate that the UE capability is restricted to the network-side device, for example, may send the first indication information to the network-side device by using the UE information response message, to indicate the specific restricted capability of the UE to the network-side device. Therefore, the network-side device can also learn, based on the first indication information, that the UE capability is restricted, to prevent the network-side device from sending a configuration exceeding the UE capability to the UE.

Optionally, that the UE sends the first indication information to the network-side device includes:
in a case that the UE capability of the UE is occupied by multiple universal subscriber identity module USIM cards, the UE sends the first indication information to the network-side device.

It should be noted that if the UE capability is restricted because the UE capability is occupied (or shared) by the multiple USIM cards, the UE sends the first indication information to the network-side device. For example, the first indication information may include a cause of the UE capability restriction, so that the network-side device can conveniently learn the UE capability restriction and the cause thereof.

It should be noted that in a case that the network-side device supports N sets of UE capabilities of the terminal, the first indication information is further used to indicate the current UE capability of the UE, where the N sets of UE capabilities include the current UE capability of the UE. In this way, the network-side device can learn the UE capability currently used by the UE, so that the network-side device can send a matching AS configuration based on the UE capability currently used by the UE, to ensure smooth transmission between the UE and the network-side device.

In this embodiment of this application, the method further includes:
in the case that the trigger condition of the RRC connection resume procedure is met, the UE performs the first behavior based on second information sent by the network-side device.

In other words, in the case that the trigger condition of the RRC connection resume procedure is met, the UE performs the first behavior based on the second information sent by the network-side device. For example, the second information may indicate whether the network-side device allows or supports the UE to perform the first behavior in the case that the trigger condition of the RRC connection resume procedure is met. For example, the UE can only perform the first behavior with the permission or support of the network-side device.

Optionally, the UE receives the second information by using broadcast (for example, system information) or dedicated signaling.

Further, the method further includes:
in a case that the UE receives the second information, when the trigger condition of the RRC connection resume procedure is met, the UE ensures that the UE capability is not lower than the target UE capability, and/or sends the target information during the RRC connection resume procedure or after the RRC connection resume procedure.

For example, when the second information indicates that the network-side device allows or supports the UE in the case that the trigger condition of the RRC connection resume procedure is met, the UE ensures that the UE capability is not lower than the target UE capability, and/or sends the target information during the RRC connection resume procedure or after the RRC connection resume procedure. In this case, in the case that the UE receives the second information, when the trigger condition of the RRC connection resume procedure is met, the UE can perform the foregoing behavior. In this way, the UE can only perform the foregoing behavior in the case that the network-side device allows or supports the UE to perform the foregoing behavior, to avoid a transmission anomaly arising from the UE behavior not supported by the network-side device.

Optionally, the method further includes:
in a case that the UE is released to the RRC inactive state by the network-side device, obtaining an RRC release message sent by the network-side device, where the RRC release message includes the second information used to indicate at least one cell.

In other words, when the UE is released to the RRC inactive state by the network-side device, the network-side device may indicate, in the RRC release message, at least one cell that can support the UE to perform the foregoing behavior, that is, a cell in which the UE is supported to ensure that the UE capability is not lower than the target UE capability and/or in which the UE sends the target information during the RRC connection resume procedure or after the RRC connection resume procedure when the trigger condition of the RRC connection resume procedure is met. In this way, the UE can determine, based on the RRC release message, in which cells the foregoing behavior can be performed, to better manage the behavior of the UE.

Optionally, the UE obtains the second information in a manner specified by a protocol, and the second information corresponding to all cells in a RAN-based notification area of the UE is consistent.

Optionally, the method further includes:
in a case that the UE does not receive the second information, the UE enters the RRC idle state when the trigger condition of the RRC connection resume procedure is met.

Understandably, if the UE receives the second information sent by the network-side device, for example, if the network-side device does not support or allow the UE to have a capability higher than or equal to the target UE capability and/or to send the target information during the RRC connection resume procedure or after the RRC connection resume procedure when the trigger condition of the RRC connection resume procedure is met, the network-side device may not send the second information to the LTE. In this case, the UE enters the RRC idle state when the trigger condition of the RRC connection resume procedure is met, to avoid a transmission anomaly that arises between the UE and the network-side device because the network-side device sends a configuration exceeding the UE capability to the UE.

For better understanding, the technical solutions provided in this application are hereinafter described by using several specific embodiments.

### Embodiment 1

When UE initiates RRC connection resumption, the UE ensures that a UE capability is consistent with a UE capability in a UE context stored by a network-side device.

### Embodiment 2

When UE initiates RRC connection resumption, if a UE capability is inconsistent with a UE capability in a UE context stored by a network-side device, the UE autonomously backs off to an RRC idle state.

### Embodiment 3

UE in a connected state may additionally report a set of lowest capabilities of the UE, where the lowest capabilities are stored by an anchor base station after the UE is released to an RRC inactive state. In other words, when the UE initiates an RRC connection resume procedure, a network-side device configures the UE based on the lowest capabilities.

Specifically, in the inactive state, the UE may move to other cells such as cell 1 to initiate RRC connection resumption. After receiving a connection resume request of the UE, a base station (serving base station) corresponding to cell 1 first obtains context information of the UE from the anchor base station. The anchor base station may directly send the lowest capabilities of the UE in the context information of the UE as UE capability information to the serving base station, and then the serving base station sends an RRC connection resume message to the UE based on the context information of the UE to perform an AS configuration.

### Embodiment 4

UE in a connected state reports a plurality of sets of capabilities of the UE to a network-side device, and numbers the plurality of sets of UE capabilities. When the network-side device releases the UE to RRC inactive, the network-side device configures a plurality of UE identities (such as a resume identity) in an RRC release message, where each UE identity is associated with one set of UE capabilities. When the terminal initiates RRC connection resumption, a used UE identity is determined based on a current capability, and the network side determines, based on a UE identity used by the UE in an RRC connection resume request message, which set of capabilities is used by the LTE. Specifically, when an anchor base station sends a UE context to a serving base station, a UE capability corresponding to this UE ID is sent to the serving base station.

### Embodiment 5

UE sends first information to a network-side device by using one of the following, where the first information is used to indicate that a UE capability of the UE is restricted or changed:
a spare bit (1 bit) in an RRC connection resume request message;
a resume cause (resume cause) value in the RRC connection resume request message;
an RRC connection resume complete message;
a UE information response (information response) message;
a logical channel corresponding to the RRC connection resume request message; and
a random access resource used in an RRC connection resume procedure.

Optionally, the UE sends the first information to the network-side device in a case that the UE capability is inconsistent with a UE capability in a context of the network-side device in an RRC inactive state. Further, in a case that the inconsistency is caused by multiple cards sharing the UE capability, the UE sends the first information to the network side.

Optionally, if the first information is allowed to be indicated by the resume cause value, the UE may further determine the carried resume cause value with reference to a trigger cause of the RRC connection resumption. For example, if the RRC connection resumption is triggered by RAN paging, and a corresponding resume cause is mt-access, that is, mobile terminated, a probability that access is allowed by the network is higher. In this case, the UE should still use mt-access. However, if the RRC connection resumption is triggered by a data service of the terminal, the terminal may set the resume cause to the first information instead of mo-Data.

Optionally, if the first information is allowed to be indicated by the RRC connection resume complete message or the UE information response message, because the two messages can carry more information, the UE can further report which capabilities of the UE are in a restricted state. In this case, the first information also includes the specifically restricted capabilities.

It should be noted that, before performing Embodiment 5, the UE may further determine whether a currently camped cell supports the operation of Embodiment 5. The UE obtains a capability of the network side by using at least one of the following:
(1) system information; and
(2) dedicated signaling, where specifically, when the UE is released to the RRC inactive state by the network side, the network side indicates one or more cells supporting this operation in an RRC release message.

In addition, Embodiment 5 may also be combined with Embodiment 3 and Embodiment 4. For Embodiment 3 and Embodiment 4, when the anchor base station sends the UE context to the serving base station, there are two cases.

Case 1: If the serving base station is upgraded (for example, the serving base station supports the UE to perform the behaviors corresponding to the foregoing Embodiment 3 to Embodiment 5), the serving base station can receive a plurality of sets of capabilities of the UE (the lowest capability and highest capability in method 3, and the plurality of sets of capabilities in method 4). In this case, the anchor base station sends the plurality of sets of capabilities of the UE to the serving base station.

Case 2: If the serving base station is not upgraded, the serving base station cannot understand the plurality of sets of capabilities of the UE. In this case, the anchor base station can only send one set of capabilities of the UE (the lowest capability in method 3 and the capability corresponding to the UE ID in method 4) to the serving base station.

In case 1, when the UE initiates RRC connection resumption on the serving base station, Embodiment 5 can be used to notify the base station which set of capabilities is currently used by the UE, for example, the set with lower capabilities.

In addition, the serving base station may indicate to the anchor base station whether the serving base station supports Embodiment 3 or Embodiment 4, and the anchor base station sends an appropriate UE context based on a capability of the serving base station.

According to the technical solutions provided in the foregoing embodiments of this application, an AS configuration exceeding the capability of the UE can be prevented from being configured by the network side for the UE in the RRC connection resume procedure, and some anomalies can be avoided, thereby ensuring smooth transmission between the UE and the network side.

FIG. 3 is a flowchart of another UE capability control method according to an embodiment of this application. As shown in FIG. 3, the method includes the following step.

Step 301: A network-side device receives target information sent by UE in a case that an RRC connection resume procedure is initiated, where the target information is used to indicate a UE capability of the UE; or in a case that a first condition is met, a network-side device releases UE to an RRC idle state when releasing the UE, where
the first condition includes at least one of the following:
the UE is a MUSIM communication device;
the UE supports a capability change; and
the UE has reported preference information of the capability change.

Specifically, in the case that the RRC connection resume procedure is initiated, the UE sends the target information to the network-side device. The network-side device can learn the capability of the UE based on the target information. Therefore, the network-side device can send, to the UE based on the target information, a configuration matching the UE capability of the UE, to ensure smooth transmission between the network-side device and the UE.

Alternatively, in the case that the first condition is met, the network-side device may release the UE to the RRC idle state when releasing the UE. For example, the UE is the MUSIM communication device, or the UE supports the capability change, or the UE has reported the preference information of the capability change to the network-side device. In these cases, the network-side device may release the UE to the RRC idle state when releasing the UE, to avoid a transmission anomaly that arises between the network-side device and the UE because the network-side device sends a configuration exceeding the UE capability of the UE to the UE, and ensure smooth transmission between the network-side device and the UE.

Optionally, the target information includes at least one of the following:
a first UE identity, where the first UE identity is associated with a first target UE capability;
first indication information, where the first indication information is used to indicate that the UE capability of the UE is restricted or changed; and
the UE capability of the UE.

Optionally, the method further includes:
the network-side device sends first configuration information to the UE, where
the first configuration information is used to configure N first UE identities associated with N sets of target UE capabilities stored by the network-side device, one set of target UE capabilities corresponds to one of the first UE identities, and the N sets of target UE capabilities include the first target UE capability.

Optionally, the method further includes:
the network-side device receives an RRC connection resume request initiated by the UE, where the RRC connection resume request includes a target first UE identity, and the target first UE identity is any one of the N first UE identities.

Optionally, in a case that the network-side device stores N sets of UE capabilities, the method further includes:
the network-side device receives the N sets of UE capabilities reported by the UE in an RRC connected state.

Optionally, the network-side device receives, by using any one of the following, the first indication information sent by the UE:
a spare bit in an RRC connection resume request message;
a resume cause value in the RRC connection resume request message;
an RRC connection resume complete message;
a UE information response message;
a logical channel corresponding to the RRC connection resume request message; and
a random access resource used in the RRC connection resume procedure.

It should be noted that, for related concepts and specific implementation processes in the foregoing embodiment, reference may be made to the description in the method embodiment in FIG. 2. To avoid repetition, details are not described again in this embodiment.

Optionally, in a case that the network-side device is a serving base station of the UE, the method further includes:
the serving base station receives a context of the UE sent by an anchor base station, where the context of the UE includes the target UE capability corresponding to the target first UE identity.

Specifically, in a case that the network-side device stores the N sets of target UE capabilities and the N first UE identities associated with the N sets of target UE capabilities, when the anchor base station sends the UE context to the serving base station, the anchor base station may send, to the serving base station based on the UE context, the target UE capability corresponding to the target first UE identity, such as a UE capability currently used by the terminal, so that the serving base station can learn the UE capability currently used by the terminal, which is helpful for the serving base station to better configure the UE.

Optionally, the method further includes:
the serving base station sends second indication information to the anchor base station, where the second indication information is used to indicate whether the serving base station supports receiving at least two sets of UE capabilities of the UE.

Further, the method further includes:
the serving base station receives either of the following sent by the anchor base station:
at least two sets of UE capabilities; and
a specific set of UE capabilities.

Understandably, in a case that the second indication information indicates that the serving base station supports receiving at least two sets of UE capabilities of the UE, the anchor base station may send the at least two sets of UE capabilities to the serving base station, or send the specific set of UE capabilities to the serving base station.

Optionally, the method further includes:
in a case that the serving base station does not support receiving at least two sets of UE capabilities of the UE, the serving base station receives a specific set of UE capabilities sent by the anchor base station.

Optionally, the specific set of UE capabilities includes either of the following:
a set of UE capabilities with lowest capabilities in the N sets of UE capabilities; and
the target UE capability corresponding to the target first UE identity.

In the solution provided by this application, the network-side device receives the target information sent by the UE in the case that the RRC connection resume procedure is initiated, where the target information is used to indicate the capability of the UE, so that the network-side device can send, to the UE based on the target information, a configuration matching the UE capability of the UE; or in the case that the first condition is met, the network-side device releases the UE to the RRC idle state when releasing the UE, to avoid a transmission anomaly that arises between the network-side device and the UE because the network-side device sends a configuration exceeding the UE capability of the UE to the UE, and ensure smooth transmission between the network-side device and the UE.

The UE capability control method provided in the embodiments of this application may be performed by a UE capability control apparatus. A UE capability control apparatus provided in the embodiments of this application is described by assuming that the UE capability control method in the embodiments of this application is performed by the UE capability control apparatus.

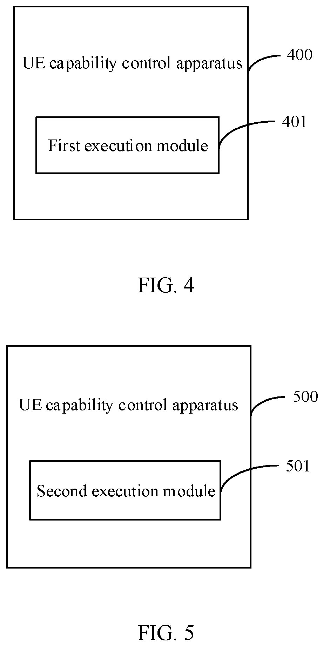

FIG. 4 is a structural diagram of a UE capability control apparatus according to an embodiment of this application. As shown in FIG. 4, the UE capability control apparatus 400 includes:
a first execution module 401, configured to perform a first behavior in a case that a trigger condition of a radio resource control RRC connection resume procedure is met, where
the first behavior includes any one of the following:
   in a case that a UE capability of UE is lower than a target UE capability, entering an RRC idle state; and
   initiating the RRC connection resume procedure, and ensuring that the UE capability of the UE is not lower than the target UE capability, and/or sending target information during the RRC connection resume procedure or after the RRC connection resume procedure, where the target information is used to indicate the UE capability of the UE.

Optionally, the target UE capability includes at least one of the following:
a UE capability stored by the UE in an RRC inactive state;
a UE capability stored by a network-side device;
a UE capability last reported by the UE to the network-side device; and
a UE capability of the UE last confirmed by the network-side device.

Optionally, the first execution module 401 is further configured to:
in a case that the target UE capability includes only one set of UE capabilities, ensure that the UE capability of the UE is not lower than the target UE capability; or
in a case that the target UE capability includes N sets of UE capabilities, ensure that the UE capability of the UE is not lower than a specific set of UE capabilities in the N sets of UE capabilities, where N is a positive integer greater than 1.

Optionally, the specific set of UE capabilities is either of the following:
a set of UE capabilities with lowest capabilities in the N sets of UE capabilities; and
a set of UE capabilities indicated by a network-side device.

Optionally, in the case that the target UE capability includes the only one set of UE capabilities, the apparatus further includes:
a sending module, configured to send first information to a network-side device in a case that the UE is in an RRC connected state, where the first information is used to indicate the target UE capability when the UE is released to an RRC inactive state.

Optionally, the target information includes at least one of the following:
a first UE identity, where the first UE identity is associated with a first target UE capability;
first indication information, where the first indication information is used to indicate that the UE capability of the UE is restricted or changed; and
the UE capability of the UE.

Optionally, the apparatus further includes:
a receiving module, configured to receive first configuration information in a case that the UE is in an RRC connected state before the UE enters an RRC inactive state, where
the first configuration information is used to configure N first UE identities associated with N sets of target UE capabilities, one set of target UE capabilities corresponds to one of the first UE identities, the N sets of target UE capabilities include the first target UE capability, and N is a positive integer greater than 1.

Optionally, in the case that the target UE capability includes the N sets of UE capabilities, the apparatus further includes:
a reporting module, configured to report the N sets of UE capabilities to a network-side device in a case that the UE is in an RRC connected state.

Optionally, the reporting module is further configured to perform at least one of the following:
reporting the N sets of UE capabilities to the network-side device;
in a case that the network-side device stores one set of UE capabilities, reporting N-1 sets of UE capabilities; and
reporting, based on one set of UE capabilities, differential information between N-1 sets of UE capabilities and the one set of UE capabilities.

Optionally, the apparatus sends the first indication information to a network-side device by using any one of the following:
a spare bit in an RRC connection resume request message;
a resume cause value in the RRC connection resume request message;
an RRC connection resume complete message;
a UE information response message;
a logical channel corresponding to the RRC connection resume request message; and
a random access resource used in the RRC connection resume procedure.

Optionally, in a case that the UE sends the first indication information by using the RRC connection resume request message, the apparatus further includes:
a determining module, configured to determine the resume cause value based on a trigger cause of RRC connection resumption and the first indication information in a case that the UE initiates an RRC connection resume request.

Optionally, in a case that the apparatus sends the first indication information to the network-side device by using the RRC connection resume complete message or the UE information response message, the first indication information is further used to indicate the restricted UE capability of the UE.

Optionally, the first execution module 401 is further configured to:
in a case that the RRC connection resume procedure is initiated, if the UE capability is inconsistent with the target UE capability, send the first indication information to a network-side device.

Optionally, the first execution module 401 is further configured to:
in a case that the UE capability of the UE is occupied by multiple universal subscriber identity module USIM cards, send the first indication information to the network-side device.

Optionally, in a case that a network-side device supports N sets of UE capabilities of a terminal, the first indication information is further used to indicate a current UE capability of the UE, where the N sets of UE capabilities include the current UE capability of the UE.

Optionally, the first execution module 401 is further configured to:
in the case that the trigger condition of the RRC connection resume procedure is met, perform the first behavior based on second information sent by a network-side device.

Optionally, the apparatus receives the second information by using broadcast or dedicated signaling.

Optionally, the first execution module 401 is further configured to:
in a case that the second information is received, when the trigger condition of the RRC connection resume procedure is met, ensure that the UE capability is not lower than the target UE capability, and/or send the target information during the RRC connection resume procedure or after the RRC connection resume procedure.

Optionally, the apparatus further includes:
an obtaining module, configured to obtain an RRC release message sent by the network-side device in a case that the UE is released to an RRC inactive state by the network-side device, where the RRC release message includes the second information used to indicate at least one cell.

Optionally, the apparatus obtains the second information in a manner specified by a protocol, and the second information corresponding to all cells in an access network RAN-based notification area of the UE is consistent.

Optionally, the first execution module 401 is further configured to:
in a case that the second information is not received, enter the RRC idle state when the trigger condition of the RRC connection resume procedure is met.

Optionally, in a case that the UE is UE corresponding to a first USIM card in a MUSIM communication device, the UE capability and the target UE capability of the UE correspond to the first USIM card.

In this embodiment of this application, for multi-card user equipment, an AS configuration that exceeds the UE capability can be prevented from being configured by the network-side device for the apparatus when the UE initiates RRC connection resumption, to avoid a transmission anomaly between the UE and the network-side device and ensure smooth transmission between the UE and the network-side device.

The UE capability control apparatus 400 in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The UE capability control apparatus 400 provided in this embodiment of this application can implement each process implemented in the method embodiment in FIG. 2, with the same technical effect achieved. To avoid repetition, details are not described herein again.

FIG. 5 is a structural diagram of another UE capability control apparatus according to an embodiment of this application. As shown in FIG. 5, the UE capability control apparatus 500 includes:
a second execution module 501, configured to receive target information sent by UE in a case that an RRC connection resume procedure is initiated, where the target information is used to indicate a UE capability of the UE; or
a second execution module 501, configured to release UE to an RRC idle state when releasing the UE in a case that a first condition is met, where the first condition includes at least one of the following:
   the UE is a MUSIM communication device;
   the UE supports a capability change; and
   the UE has reported preference information of the capability change.

Optionally, the target information includes at least one of the following:
a first UE identity, where the first UE identity is associated with a first target UE capability;
first indication information, where the first indication information is used to indicate that the UE capability of the UE is restricted or changed; and
the UE capability of the UE.

Optionally, the apparatus further includes:
a first sending module, configured to send first configuration information to the UE, where
the first configuration information is used to configure N first UE identities associated with N sets of target UE capabilities stored by the apparatus, one set of target UE capabilities corresponds to one of the first UE identities, and the N sets of target UE capabilities include the first target UE capability.

Optionally, the apparatus further includes:
a first receiving module, configured to receive an RRC connection resume request initiated by the UE, where the RRC connection resume request includes a target first UE identity, and the target first UE identity is any one of the N first UE identities.

Optionally, in a case that the apparatus stores N sets of UE capabilities, the first receiving module is further configured to:
receive the N sets of UE capabilities reported by the UE in an RRC connected state.

Optionally, the apparatus receives, by using any one of the following, the first indication information sent by the UE:
a spare bit in an RRC connection resume request message;
a resume cause value in the RRC connection resume request message;
an RRC connection resume complete message;
a UE information response message;
a logical channel corresponding to the RRC connection resume request message; and
a random access resource used in the RRC connection resume procedure.

Optionally, the apparatus is a serving base station of the UE, and the apparatus further includes:
a second receiving module, configured to receive a context of the UE sent by an anchor base station, where the context of the UE includes the target UE capability corresponding to the target first UE identity.

Optionally, the apparatus further includes:
a second sending module, configured to send second indication information to the anchor base station, where the second indication information is used to indicate whether the apparatus supports receiving at least two sets of UE capabilities of the UE.

Optionally, the second receiving module is further configured to:
receive either of the following sent by the anchor base station:
at least two sets of UE capabilities; and
a specific set of UE capabilities.

Optionally, the second receiving module is further configured to:
in a case that the apparatus does not support receiving at least two sets of UE capabilities of the UE, receive a specific set of UE capabilities sent by the anchor base station.

Optionally, the specific set of UE capabilities includes either of the following:
a set of UE capabilities with lowest capabilities in the N sets of UE capabilities; and
the target UE capability corresponding to the target first UE identity.

In this embodiment of this application, the apparatus receives the target information sent by the UE in the case that the RRC connection resume procedure is initiated, where the target information is used to indicate the capability of the UE, so that the apparatus can send, to the UE based on the target information, a configuration matching the UE capability of the UE; or the apparatus releases the UE to the RRC idle state when releasing the UE in the case that the first condition is met, to avoid a transmission anomaly that arises between the apparatus and the UE because the apparatus sends a configuration exceeding the UE capability of the UE to the UE.

The UE capability control apparatus 500 provided in this embodiment of this application can implement each process implemented by the network-side device in the method embodiment in FIG. 3, with the same technical effect achieved. To avoid repetition, details are not described herein again.

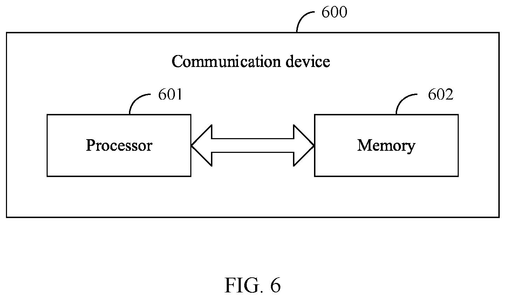

Optionally, as shown in FIG. 6, an embodiment of this application further provides a communication device 600, including a processor 601 and a memory 602. The memory 602 stores a program or instructions capable of running on the processor 601. For example, when the communication device 600 is a terminal, and the program or instructions are executed by the processor 601, the steps of the foregoing method embodiment in FIG. 2 are implemented, with the same technical effect achieved. When the communication device 600 is a network-side device, and the program or instructions are executed by the processor 601, the steps of the foregoing method embodiment in FIG. 3 are implemented, with the same technical effect achieved. To avoid repetition, details are not described herein again.

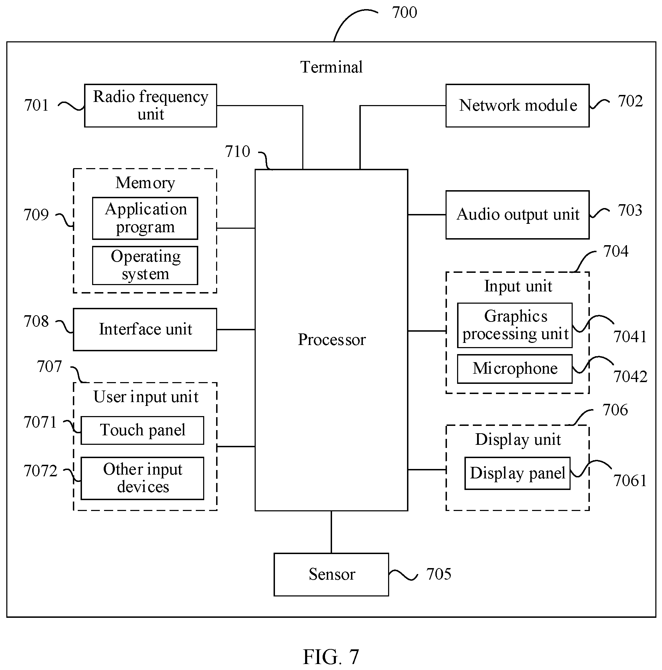

An embodiment of this application further provides a terminal, including a processor and a communication interface. The processor is configured to perform a first behavior in a case that a trigger condition of an RRC connection resume procedure is met, where the first behavior includes any one of the following: in a case that a UE capability of the UE is lower than a target UE capability, entering an RRC idle state; and initiating the RRC connection resume procedure, and ensuring that the UE capability of the UE is not lower than the target UE capability, and/or sending target information during the RRC connection resume procedure or after the RRC connection resume procedure, where the target information is used to indicate the UE capability of the UE. The terminal embodiment corresponds to the foregoing terminal-side method embodiment, and each implementation process and implementation of the foregoing method embodiment can be applied to the terminal embodiment, with the same technical effect achieved. Specifically, FIG. 7 is a schematic diagram of a hardware structure of a terminal for implementing an embodiment of this application.

The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 7 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 710.

The processor 710 is configured to perform a first behavior in a case that a trigger condition of an RRC connection resume procedure is met, where the first behavior includes any one of the following:
in a case that a UE capability of the UE is lower than a target UE capability, entering an RRC idle state; and
initiating the RRC connection resume procedure, and ensuring that the UE capability of the UE is not lower than the target UE capability, and/or sending target information during the RRC connection resume procedure or after the RRC connection resume procedure, where the target information is used to indicate the UE capability of the UE.

In this embodiment of this application, for a multi-card terminal, an AS configuration that exceeds the terminal capability can be prevented from being configured by the network-side device when the terminal initiates RRC connection resumption, to avoid a transmission anomaly between the terminal and the network-side device and ensure smooth transmission between the terminal and the network-side device.

The terminal 700 provided in this embodiment of this application can implement all processes implemented in the method embodiment in FIG. 2, with the same technical effect achieved. To avoid repetition, details are not described herein again.

An embodiment of this application further provides a network-side device. The network-side device is a target node, including a processor and a communication interface. The communication interface is configured to receive target information sent by UE in a case that an RRC connection resume procedure is initiated, where the target information is used to indicate a UE capability of the UE; or the processor is configured to release UE to an RRC idle state when releasing the UE in a case that a first condition is met, where the first condition includes at least one of the following: the UE is a MUSIM communication device; the UE supports a capability change; and the UE has reported preference information of the capability change. The network-side device embodiment corresponds to the foregoing method embodiment in FIG. 3, and each implementation process and implementation of the foregoing method embodiment can be applied to the network-side device embodiment, with the same technical effect achieved.

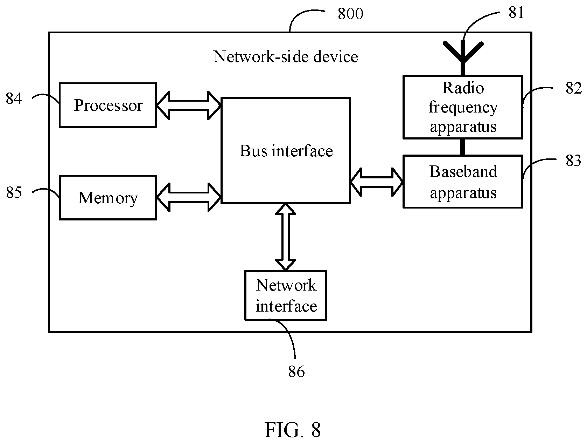

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The method performed by the network-side device in the foregoing embodiment may be implemented in the baseband apparatus 83. The baseband apparatus 83 includes a baseband processor.

The baseband apparatus 83 may include, for example, at least one baseband unit, where a plurality of chips are disposed on the baseband unit. As shown in FIG. 8, one of the chips is, for example, the baseband processor, connected to the memory 85 by using a bus interface, to invoke a program in the memory 85 to perform the operation of the network device shown in the foregoing method embodiment.

The network-side device may further include a network interface 86, where the interface is, for example, a common public radio interface (common public radio interface, CPRI).

Specifically, the network-side device 800 in this embodiment of the present invention further includes a program or instructions stored in the memory 85 and capable of running on the processor 84. When the processor 84 invokes the program or instructions in the memory 85, the method performed by each module shown in FIG. 5 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment in FIG. 2 is implemented, or each process of the foregoing method embodiment in FIG. 3 is implemented, with the same technical effect achieved. To avoid repetition, details are not described herein again.

The processor is a processor in the terminal in the foregoing embodiment. The readable storage medium may be non-volatile or non-transitory. The readable storage medium may include a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing method embodiment in FIG. 2 or implement each process of the foregoing method embodiment in FIG. 3, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing method embodiment in FIG. 2 or implement each process of the foregoing method embodiment in FIG. 3, with the same technical effect achieved. To avoid repetition, details are not described herein again.

An embodiment of this application further provides a communication system, including a terminal and a network-side device. The terminal may be configured to perform the steps of the method in FIG. 2. The network-side device may be configured to perform the steps of the foregoing method in FIG. 3.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A UE capability control method, comprising:
performing, by UE, a first behavior in a case that a trigger condition of a radio resource control RRC connection resume procedure is met, wherein
the first behavior comprises any one of the following:
in a case that a UE capability of the UE is lower than a target UE capability, entering an RRC idle state; and
initiating the RRC connection resume procedure, and ensuring that the UE capability of the UE is not lower than the target UE capability, and/or sending target information during the RRC connection resume procedure or after the RRC connection resume procedure, wherein the target information is used to indicate the UE capability of the UE.

2. The method according to claim 1, wherein the target UE capability comprises at least one of the following:
a UE capability stored by the UE in an RRC inactive state;
a UE capability stored by a network-side device;
a UE capability last reported by the UE to the network-side device; and
a UE capability of the UE last confirmed by the network-side device.

3. The method according to claim 1, wherein the ensuring that the UE capability of the UE is not lower than the target UE capability comprises:
in a case that the target UE capability comprises only one set of UE capabilities, ensuring, by the UE, that the UE capability of the UE is not lower than the target UE capability; or
in a case that the target UE capability comprises N sets of UE capabilities, ensuring, by the UE, that the UE capability of the UE is not lower than a specific set of UE capabilities in the N sets of UE capabilities, wherein N is a positive integer greater than 1.

4. The method according to claim 3, wherein the specific set of UE capabilities is either of the following:
a set of UE capabilities with lowest capabilities in the N sets of UE capabilities; and
a set of UE capabilities indicated by a network-side device.

5. The method according to claim 3, wherein in the case that the target UE capability comprises the only one set of UE capabilities, the method further comprises:
in a case that the UE is in an RRC connected state, sending first information to a network-side device, wherein the first information is used to indicate the target UE capability when the UE is released to an RRC inactive state.

6. The method according to claim 1, wherein the target information comprises at least one of the following:
a first UE identity, wherein the first UE identity is associated with a first target UE capability;
first indication information, wherein the first indication information is used to indicate that the UE capability of the UE is restricted or changed; and
the UE capability of the UE.

7. The method according to claim 6, wherein the method further comprises:
before the UE enters an RRC inactive state, receiving first configuration information in a case that the UE is in an RRC connected state, wherein
the first configuration information is used to configure N first UE identities associated with N sets of target UE capabilities, one set of target UE capabilities corresponds to one of the first UE identities, the N sets of target UE capabilities comprise the first target UE capability, and N is a positive integer greater than 1.

8. The method according to claim 3 or 7, wherein in the case that the target UE capability comprises the N sets of UE capabilities, the method further comprises:
in a case that the UE is in an RRC connected state, reporting the N sets of UE capabilities to a network-side device.

9. The method according to claim 8, wherein the reporting the N sets of UE capabilities to a network-side device comprises at least one of the following:
reporting the N sets of UE capabilities to the network-side device;
in a case that the network-side device stores one set of UE capabilities, reporting N-1 sets of UE capabilities; and
reporting, based on one set of UE capabilities, differential information between N-1 sets of UE capabilities and the one set of UE capabilities.

10. The method according to claim 6, wherein the UE sends the first indication information to a network-side device by using any one of the following:
a spare bit in an RRC connection resume request message;
a resume cause value in the RRC connection resume request message;
an RRC connection resume complete message;
a UE information response message;
a logical channel corresponding to the RRC connection resume request message; and
a random access resource used in the RRC connection resume procedure.

11. The method according to claim 10, wherein in a case that the UE sends the first indication information by using the RRC connection resume request message, the method further comprises:
in a case that the UE initiates an RRC connection resume request, determining the resume cause value based on a trigger cause of RRC connection resumption and the first indication information.

12. The method according to claim 10, wherein in a case that the UE sends the first indication information to the network-side device by using the RRC connection resume complete message or the UE information response message, the first indication information is further used to indicate the restricted UE capability of the UE.

13. The method according to claim 6, wherein the performing, by UE, a first behavior in a case that a trigger condition of an RRC connection resume procedure is met comprises:
in a case that the UE initiates the RRC connection resume procedure, if the UE capability is inconsistent with the target UE capability, sending, by the UE, the first indication information to a network-side device.

14. The method according to claim 13, wherein the sending, by the UE, the first indication information to a network-side device comprises:
in a case that the UE capability of the UE is occupied by multiple universal subscriber identity module USIM cards, sending, by the UE, the first indication information to the network-side device.

15. The method according to claim 6, wherein in a case that a network-side device supports N sets of UE capabilities of a terminal, the first indication information is further used to indicate a current UE capability of the UE, wherein the N sets of UE capabilities comprise the current UE capability of the UE.

16. The method according to claim 1, wherein the method further comprises:
in the case that the trigger condition of the RRC connection resume procedure is met, performing, by the UE, the first behavior based on second information sent by a network-side device.

17. The method according to claim 16, wherein the UE receives the second information by using broadcast or dedicated signaling.

18. The method according to claim 16, wherein the method further comprises:
in a case that the UE receives the second information, when the trigger condition of the RRC connection resume procedure is met, ensuring, by the UE, that the UE capability is not lower than the target UE capability, and/or sending the target information during the RRC connection resume procedure or after the RRC connection resume procedure.

19. The method according to claim 18, wherein the method further comprises:
in a case that the UE is released to an RRC inactive state by the network-side device, obtaining an RRC release message sent by the network-side device, wherein the RRC release message comprises the second information used to indicate at least one cell.

20. The method according to claim 16, wherein the UE obtains the second information in a manner specified by a protocol, and the second information corresponding to all cells in an access network RAN-based notification area of the UE is consistent.

21. The method according to claim 16, wherein the method further comprises:
in a case that the UE does not receive the second information, entering, by the UE, the RRC idle state when the trigger condition of the RRC connection resume procedure is met.

22. The method according to claim 1, wherein in a case that the UE is UE corresponding to a first USIM card in a multi-universal subscriber identity module MUSIM communication device, the UE capability and the target UE capability of the UE correspond to the first USIM card.

23. A UE capability control method, comprising:
receiving, by a network-side device, target information sent by UE in a case that an RRC connection resume procedure is initiated, wherein the target information is used to indicate a UE capability of the UE; or
in a case that a first condition is met, releasing, by a network-side device, UE to an RRC idle state when releasing the UE, wherein the first condition comprises at least one of the following:
the UE is a MUSIM communication device;
the UE supports a capability change; and
the UE has reported preference information of the capability change.

24. The method according to claim 23, wherein the target information comprises at least one of the following:
a first UE identity, wherein the first UE identity is associated with a first target UE capability;
first indication information, wherein the first indication information is used to indicate that the UE capability of the UE is restricted or changed; and
the UE capability of the UE.

25. The method according to claim 24, wherein the method further comprises:
sending, by the network-side device, first configuration information to the UE, wherein
the first configuration information is used to configure N first UE identities associated with N sets of target UE capabilities stored by the network-side device, one set of target UE capabilities corresponds to one of the first UE identities, and the N sets of target UE capabilities comprise the first target UE capability.

26. The method according to claim 25, wherein the method further comprises:
receiving, by the network-side device, an RRC connection resume request initiated by the UE, wherein the RRC connection resume request comprises a target first UE identity, and the target first UE identity is any one of the N first UE identities.

27. The method according to claim 24, wherein in a case that the network-side device stores N sets of UE capabilities, the method further comprises:
receiving, by the network-side device, the N sets of UE capabilities reported by the UE in an RRC connected state.

28. The method according to claim 24, wherein the network-side device receives, by using any one of the following, the first indication information sent by the UE:
a spare bit in an RRC connection resume request message;
a resume cause value in the RRC connection resume request message;
an RRC connection resume complete message;
a UE information response message;
a logical channel corresponding to the RRC connection resume request message; and
a random access resource used in the RRC connection resume procedure.

29. The method according to claim 26, wherein the network-side device is a serving base station of the UE, and the method further comprises:
receiving, by the serving base station, a context of the UE sent by an anchor base station, wherein the context of the UE comprises the target UE capability corresponding to the target first UE identity.

30. The method according to claim 29, wherein the method further comprises:
sending, by the serving base station, second indication information to the anchor base station, wherein the second indication information is used to indicate whether the serving base station supports receiving at least two sets of UE capabilities of the UE.

31. The method according to claim 29, wherein the method further comprises:
receiving, by the serving base station, either of the following sent by the anchor base station:
at least two sets of UE capabilities; and
a specific set of UE capabilities.

32. The method according to claim 29, wherein the method further comprises:
in a case that the serving base station does not support receiving at least two sets of UE capabilities of the UE, receiving, by the serving base station, a specific set of UE capabilities sent by the anchor base station.

33. The method according to claim 31 or 32, wherein the specific set of UE capabilities comprises either of the following:
a set of UE capabilities with lowest capabilities in the N sets of UE capabilities; and
the target UE capability corresponding to the target first UE identity.

34. A UE capability control apparatus, applied to UE and comprising:
a first execution module, configured to perform a first behavior in a case that a trigger condition of a radio resource control RRC connection resume procedure is met, wherein
the first behavior comprises any one of the following:
in a case that a UE capability of the UE is lower than a target UE capability, entering an RRC idle state; and
initiating the RRC connection resume procedure, and ensuring that the UE capability of the UE is not lower than the target UE capability, and/or sending target information during the RRC connection resume procedure or after the RRC connection resume procedure, wherein the target information is used to indicate the UE capability of the UE.

35. A UE capability control apparatus, comprising:
a second execution module, configured to receive target information sent by UE in a case that an RRC connection resume procedure is initiated, wherein the target information is used to indicate a UE capability of the UE; or
a second execution module, configured to release UE to an RRC idle state when releasing the UE in a case that a first condition is met, wherein the first condition comprises at least one of the following:
the UE is a MUSIM communication device;
the UE supports a capability change; and
the UE has reported preference information of the capability change.

36. A terminal, comprising a processor and a memory, wherein the memory stores a program or instructions capable of running on the processor, and when the program or instructions are executed by the processor, the steps of the UE capability control method according to any one of claims 1 to 22 are implemented.

37. A network-side device, comprising a processor and a memory, wherein the memory stores a program or instructions capable of running on the processor, and when the program or instructions are executed by the processor, the steps of the UE capability control method according to any one of claims 23 to 33 are implemented.

38. A readable storage medium, wherein the readable storage medium stores a program or instructions, and when the program or instructions are executed by a processor, the steps of the UE capability control method according to any one of claims 1 to 22 are implemented, or the steps of the UE capability control method according to any one of claims 23 to 33 are implemented.
